# EUROPEAN PATENT APPLICATION

(11) **EP 2 778 625 A1**
(43) Date of publication of application: **17.09.2014**
(21) Application number: 13158992.1
(22) Date of filing: 13.03.2013
(51) Int. Cl.: G01D 5/32

(54) **Method and system to determine positional movement**

(71) Applicant: Delphi Technologies, Inc., Troy, MI 48007 (US)
(72) Inventor: Wozniak, Marek, 32-031 Mogilany (PL); Puchala, Grzegorz, 30-836 Krakow (PL)
(74) Representative: Neill, Andrew Peter

(57) **Abstract**

A member for use in a system to measure relative movement, said member including a profile comprising a series of elements located along an axis, said elements being configured to provide variability in the luminosity or transmissibility of light from/through said elements or within portions of the elements.

## Description

### Technical Field

This invention relates to a method, apparatus, and system to detect positional movement such as displacement, and has particular but not exclusive application to detecting linear or rotational displacement or speed.

### Background of the Invention

Devices are known which measure linear or rotational displacement such as those which have application in machine tools, robots, speedometers and such like. A variety of different types of systems is known. Such systems usually comprise a component such as a detector/ sensor device attached to a first object whose relative (linear or rotational) movement with respect to a second object (which may be fixed) is to be determined. To the second object is typically attached a profiled member that interacts with the detector/sensor device to determine displacement /position.

Known systems use slotted members such as slotted discs, or optical encoders used in conjunction with light sources and sensors to determine movement of an object, or relative movement between two objects. Other known systems use electrical potentiometers to determine angular or linear displacement. Other known systems measure voltages developed in stators coils subsequent to the relative movement of a rotor. Such systems are unreliable and often complex and expensive. Furthermore, most conventional systems cannot determine the direction of movement.

It is an object of the invention to overcome problems in prior art systems and provide an inexpensive, reliable system with increased resolution. It is a further preferred object to provide a system wherein direction can also be determined readily.

### Summary of the Invention

In one aspect is provided a member for use in a system to measure relative movement, said member including a profile comprising a series of elements located along an axis, said elements being configured to provide variability in the luminosity or transmissibility of light from/through said elements or within portions of the elements.

The elements are preferably regularly spaced along said axis, and provided by a profiled edge, or cut-out or slotted regions of said member.

The elements may comprise shaded portions.

Each of the elements may include a portion which is variable in terms of the amount of said luminosity or transmissibility along said axis.

The profile may be wave-form, tooth-form, or saw-form.

The elements may be provided by a series of slotted or cut-out portions, or individual waves, teeth, slotted or cut-out portions.

The variability may be provided by having waves, teeth, slots, cut-out portions or shaded elements/portions having varying area, pitch, height, amplitude or width.

The area, pitch, height, amplitude or width may vary in a substantially sequential fashion.

The axis may be circumferential, linear or radial.

The member may be attachable to either a stationary or movable member whose relative movement(s) is to be measured.

The element profile may include a sloped or continuously variable portion with respect to said axis.

The elements are preferably asymmetrical.

In a further aspect is provided a method for determining relative movement comprising: arranging such a member to be moveable relative to a light sensor along said axis; detecting by said light sensor, the intensity of light transmitted through, or reflected from, successive or individual elements during said relative movement; and determining relative movement from the variability in light intensity detected at said light sensor.

The method may involve arranging a light source so as direct light through successive elements towards said sensor during said relative movement.

The relative movement may be determined by determining the variation of light intensity provided by said elements or within individual elements, as the element(s) move into alignment with the light sensor.

The method may include producing a signal representative of said intensity, and wherein directivity is determined from the form of said signal.

The light sensor is preferably a photoresistor.

In a further aspect is provided a system to determine relative movement comprising: such a member arranged to be moveable relative to a light sensor along said axis; means to detect at the light sensor, the intensity of light transmitted through, or reflected from, successive or individual elements during said relative movement; and means to determine relative movement from the variability in said light intensity detected at said light sensor.

The light source may be arranged so as to direct light through successive elements towards said sensor during said relative movement.

The system may including mean to determine the variation of light intensity provided by said elements or within individual elements, as the element(s) moves into alignment with the light sensor.

The system may include means to produce a signal representative of said intensity, and wherein the directivity is determined from the form of said signal. The light sensor is preferably a photoresistor.

### Brief Description of the Drawings

The present invention will now be described, by way of example, with reference to the accompanying drawings, in which:
Figures 1 illustrates a basic primitive encoder and its operation.
Figure 2 illustrates the operation of a complex rotation impulse encoder.
Figure 3 shows examples of complex disc encoders.
Figure 4 shows schematically examples of rotational and linear displacement measurement means based on potentiometers.
Figure 5 illustrates the operation of magnetic resolvers.
Figure 6 shows the characteristics of a photoresistor.
Figure 7 illustrates a sensor ring and a system incorporating the sensor ring according to one aspect.
Figure 8 illustrates the operation of the figure 7 embodiment.
Figure 9 shows the operation of a stationary sensor ring.
Figure 10 illustrates the system measuring linear displacement using the similar profile of the figure 7 example.
Figure 11 illustrates a sensor ring according to an alternative aspect.
Figure 12 illustrates the operation of the figure 11 device.
Figure 13 shows alternative examples of profiles.

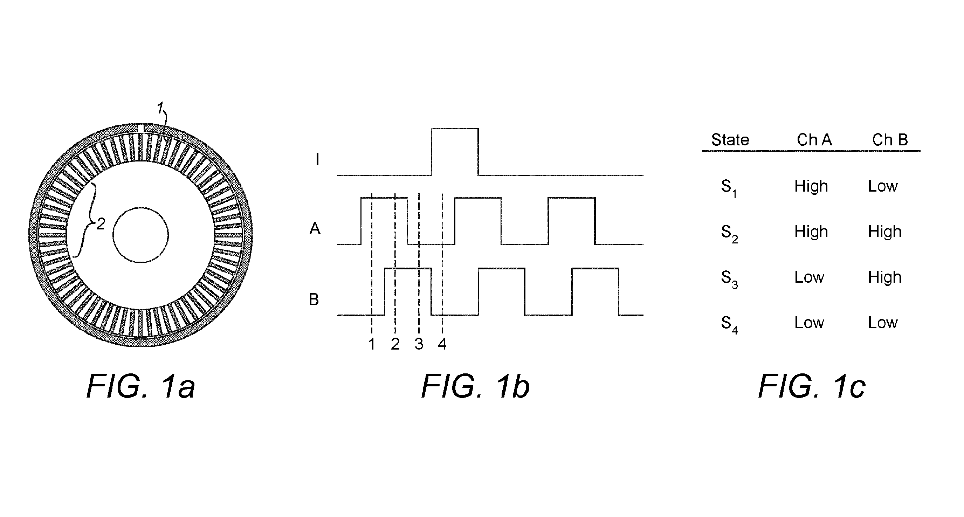

A known system of detecting rotational movement utilises optical encoders, such as that described with reference to figure 1. These encoders can be attached to a member such as a shaft or wheel whose rotational movement or speed is to be determined. The system makes use of a simple disc 1 having a number of openings or slots 2 arranged on the periphery, as mentioned it can be attached to a rotational member whose rotation is to be determined. A light beam is provided from a light source fixed on one side of the disc, and arranged to direct a beam perpendicular to the disc axis at its periphery, and a fixed light detection means (such as a sensor) is provided which is located on the opposite side of the disc, to detect light from the light source which passes through the disc, as it is rotated. As the disc is rotated, the disc slots (openings) sequentially allow light to pass as seen in figure 1a. Associated electronics convert the light pulses into electrical pulses. It is to be noted that as each slot is identical and thus the light pulses produced are identical to. It is also to be noted that the pulses have vertical edges, so effectively the light intensity is the same, either present or not; thus the waveform of pulses is square or rectangular in form. Typically two channels are provided to produce two sets of pulses as shown in figure 1c to provide the system states in the table. The problems with such systems are that they cannot provide any indication of rotational direction of movement. Also they cannot recognise actual (absolute) position after rebooting the system.

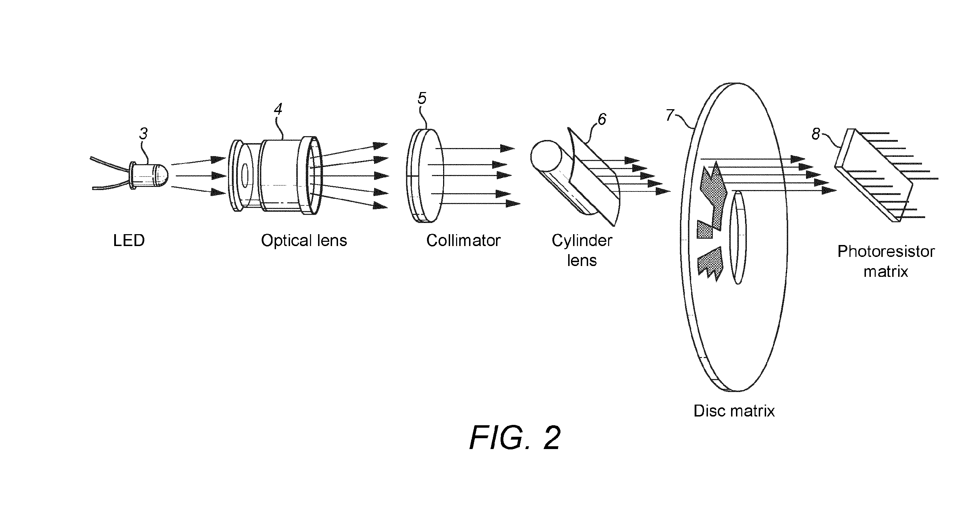

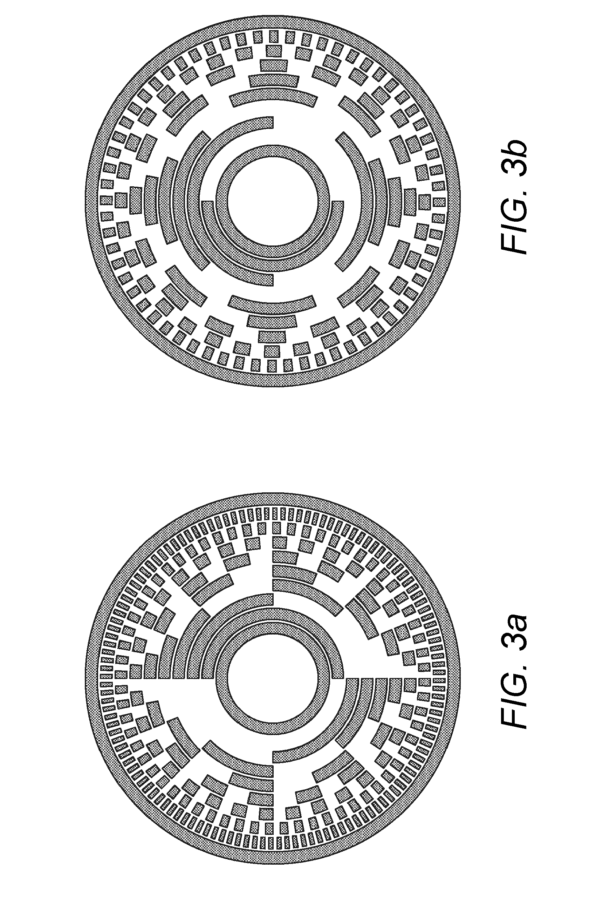

Rotational impulse encoders are also known as described in figure 2. A light source such as an LED 3 is focussed by lens 4 onto a collimation member 5 to provide parallel beams directed to a cylindrical lens 6 so as to provide a one-dimensional (flat) beam which falls onto a disc matrix/encoder 7. The disc matrix comprises a number of slots of complex profile as shown in figure 3a and b. The slots are radially arranged such that at particular angles (rotational positions) of the disc, a unique combination of individual light beams are provided in a one-dimensional array. These beams are detected by an elongate photoresistor matrix 8 to provide a series of parallel pulses which can be encoded into a binary format to provide positional information; the light is effectively encoded into binary. The disadvantage with such a system that it is very complex and thus expensive to construct.

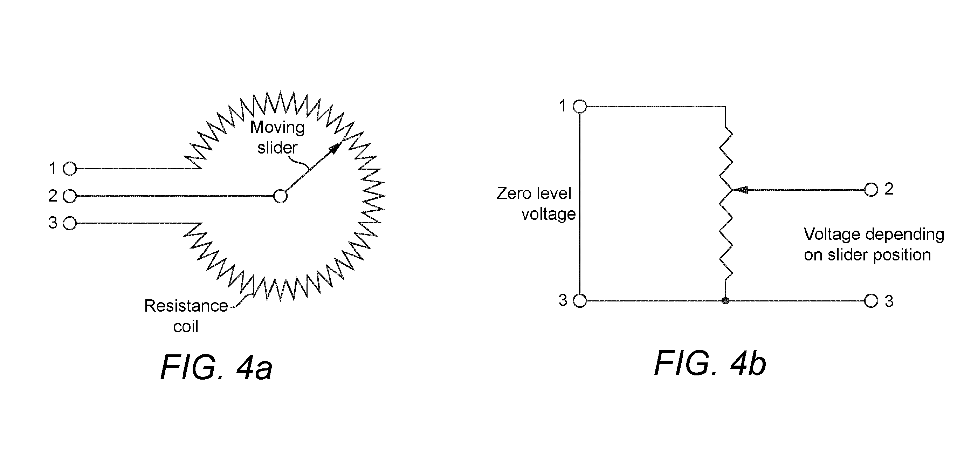

Another known system is to use electrical potentiometer type devices as shown in figure 4. Figures 4a and b show a schematic representations of a rotational/linear positional detectors comprising a moving slider and either a radially or linearly arranged resistance respectively, wherein the voltage output from the slider is measured to give an indication of movement. The problems with these types of device are they suffer from wear due to friction, are moisture sensitive and can lead to inaccuracies due to being analogue system also.

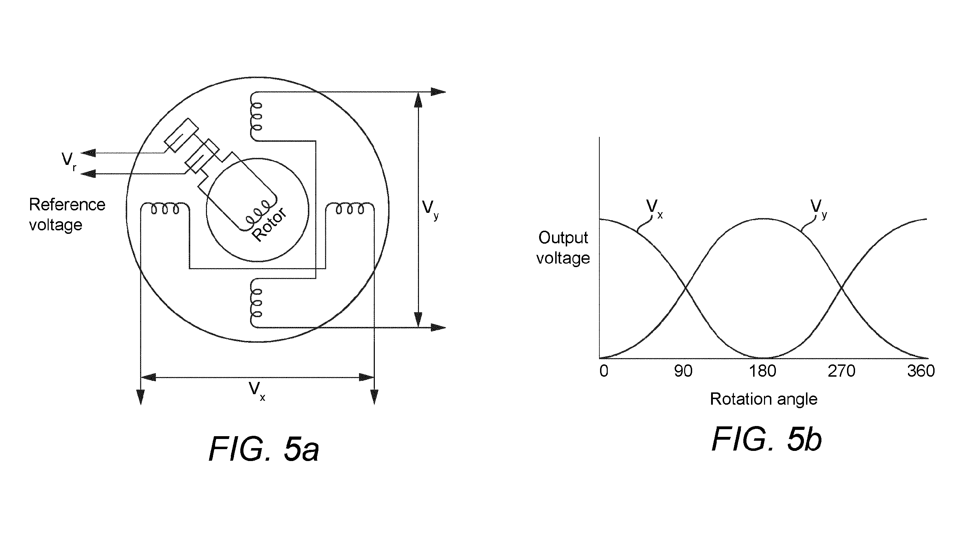

Other known systems includes magnetic resolvers as shown in figure 5a whereby voltage outputs are provided as seen in figure 5b from stator coils as a rotor is rotated. Such devices require complex expensive electrical construction. Furthermore, the coils generate an electromagnetic field inside mechatronic module and can adversely affect testing and operation when applied to practical applications.

Other systems in include light barrier sensors with sensor rings. Although directional information may be provided by advanced light barrier systems with two sensors, these are expensive. For greater accuracy several light barriers may be provided but these, again are expensive and complex.

### Description of the Preferred Embodiments

Examples of the invention will now be described.

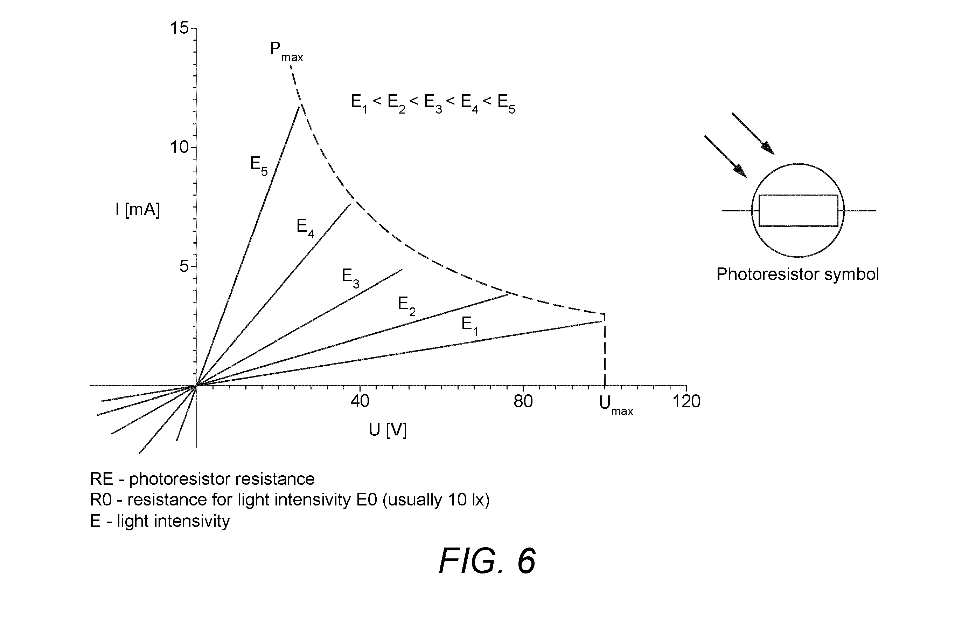

In preferred examples, photoresistors are used as light sensors. This allows the light intensity to determined, and examples of the invention exploit this feature. The characteristics of a photoresistor are shown in figure 6. As can be seen there is a linear relationship between voltage applied to, and the current running through the photoresistor. However this relationship varies with different light intensity, the amount and intensity of light falling on the photoresistor. Thus in essence, the light intensity falling on the photoresistor can be measured and detected.

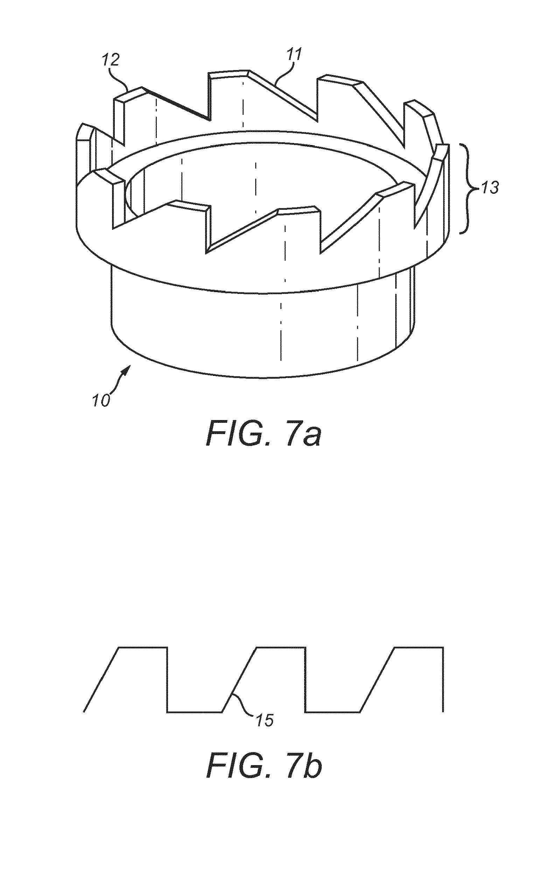

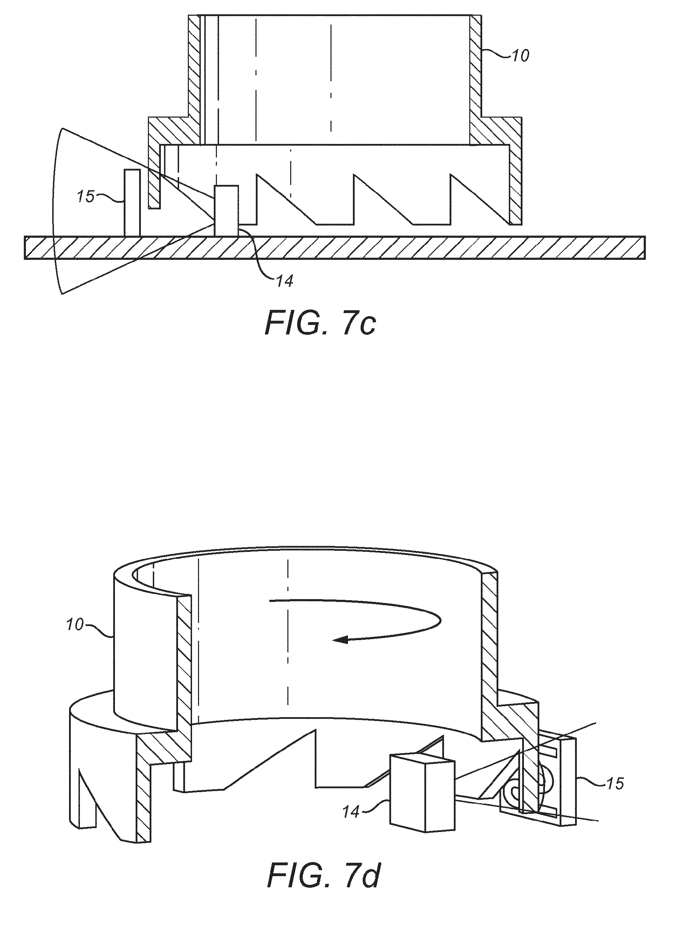

Figure 7 shows a simple example illustrating a system and method for detecting rotational position, speed or directions according to one aspect. A component 10, generally of a ring structure is provided and is shown in three-dimensional form in figure 7a. It can be attached to any member whose rotation is to be determined, such as a rotational shaft. The outer wall 13 of one end of the ring (i.e. the ridge) has a profile comprising a series of cut-out portions 11 or grooves as shown; effectively providing the circumference with a toothed profile consisting a series of teeth 12. A portion of the profile along the circumferential axis is shown in more detail in figure 7b.

Figure 7c and d shows how such a ring 10 can be used in conjunction with a light source 14 arranged on the inner circumference of the ring adjacent to the profiled wall, and directed onto a light sensor 15 (e.g. photoresistor) located on the outer side. Figure 7c shows a sectional view with light source and photosensitive device positioned on opposite sides of the circumference wall 13 of the ring. The light sensor may comprise a photoresistor.

Rotation of the ring allows light falling on the sensor through adjacent cut-out portions 11 to be interrupted sequentially. The shape of the cut-out includes a portion of continually varying slope, so that over small rotational angles, as one slot moves into alignment with the light source/sensor pair, light falls on the photoresistor in continuously varying amount/intensity. The corresponding current generated in the photoresistor slowly increases to a maximum as a result of the sloping portions; this will be explained in more detail hereinafter. Thus the profile of the wall (with the teeth having sloping portion) together with the use of a photoresistor provides for greater resolution by quantifying the light incident between adjacent teeth. In contrast, standard square/rectangular waveforms of the prior art (which have vertical edges) cannot provide such varying intensity/amount of light incident on the a light sensor.

Thus, in contrast to prior art systems, the sloping portion provides a (continuously) variable aperture for light to pass. As a photoresistor can measure light intensity, the rotational movement of the wall provides a continuously varying amount of light falling on the photoresistor even within very small angle of rotation. Depending on the exact position of the ring and thus the exact position of a slot, the amount of light falling on the photoresistor will thus vary.

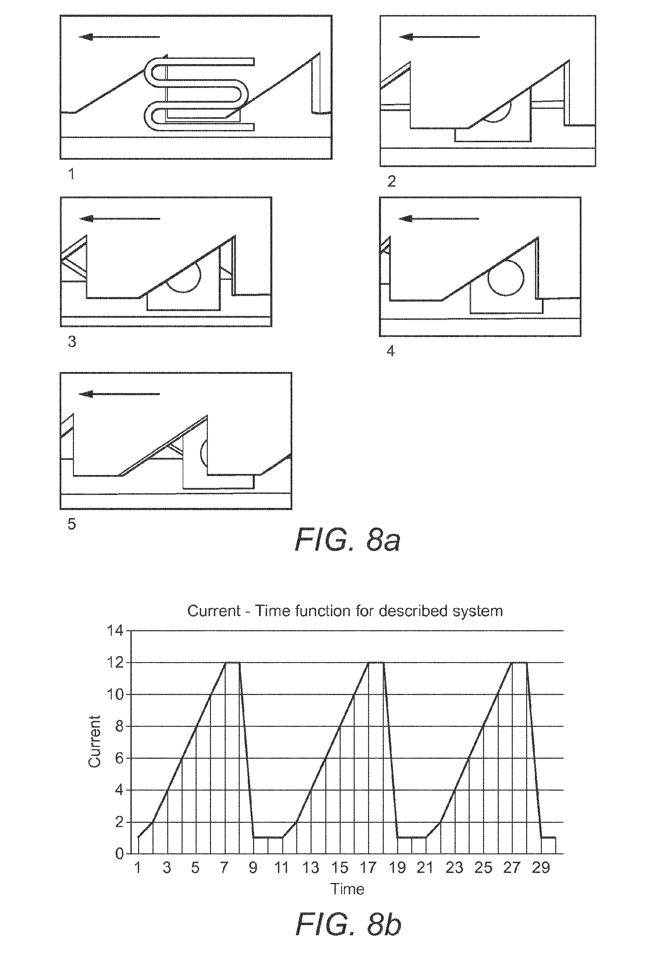

As mentioned, when the ring is rotated at uniform speed the current in the photoresistor will thus vary, as shown in figures 8a and b. Figure 8a shows snapshots of how individual teeth between the cut-out portions obscure the light source in varying amounts as the ring member is rotated. Thus the corresponding current generated in the light sensor (photoresistor) shows a consequential series of pulses provided by such a ring which can be analysed to determine rotational information, such as position or speed.

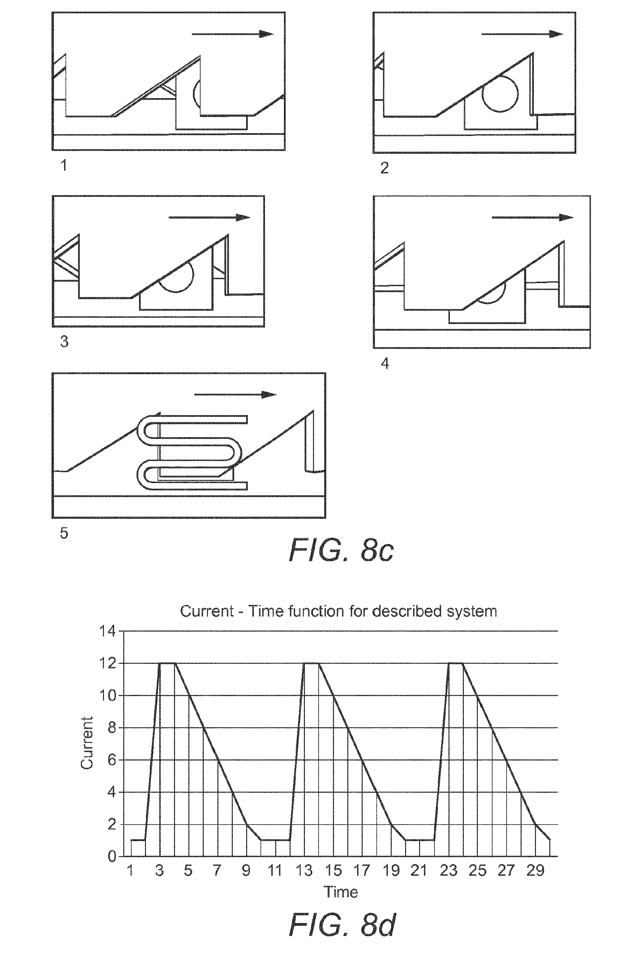

An advantage of such a profile is that is also provides directional information. By providing the teeth/slots having an asymmetric shape, the direction of rotation can be determined from the format of the pulses/resultant waveform; which either have a steep leading edge or a shallow leading edge (compared with the trailing edge). Figures 8c and d show snapshots in time similar to figure 8a and b, and the corresponding current generated, but where the ring is rotated in the opposite direction. As can be seen from the consequential waveform, the pulses have a steep leading edge and a shallow trailing edge. Thus directional information can be gleaned.

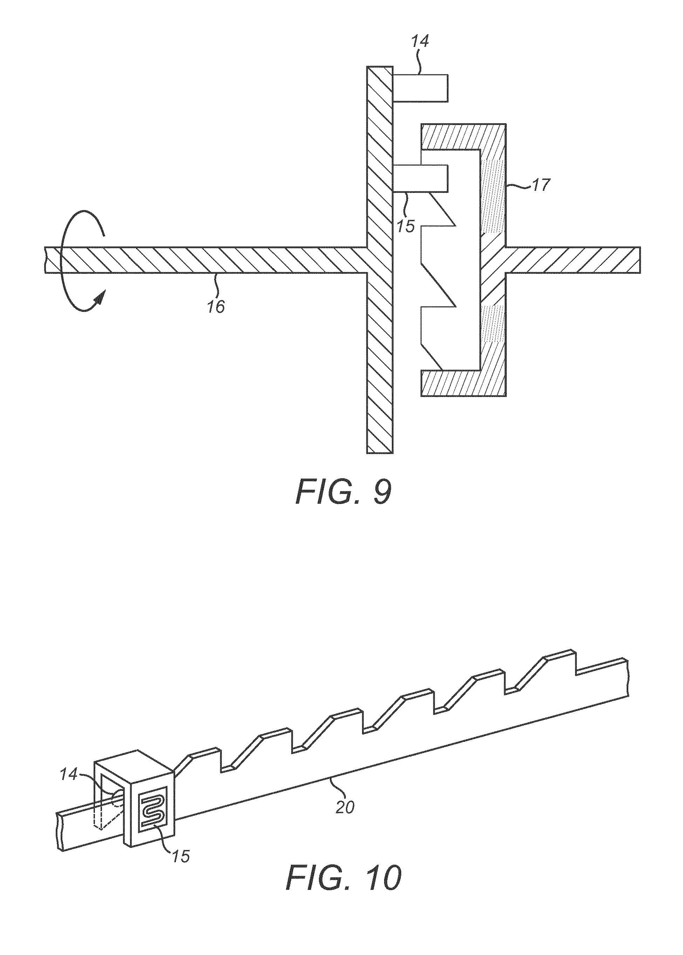

Of course it is to be noted that the member including the slotted profile may be fixed, i.e. stationary, and the light-source/sensor pair made movable. For example the light-source/sensor pair may be provided in a calliper type arrangement and attached to a moving member, which moves around the circumference of the ring wall. Figure 9 shows such an arrangement wherein a the light source and light sensor pair may be attached to a rotating member 16 so as to rotate around the circumference (wall) of the ring 17.

Examples are not restricted to detecting rotational movements. Examples are equally applicable to detecting linear movements. Figure 10 illustrates an example of how a similar profile on an elongate member 20 can be used to provide positional information. The elongate member has a series of cut-out portions similar to that of the figure 7 example, so to provide an asymmetrical toothed profile with a sloping portion on the teeth; the sensor (e.g. photoresistor) and light source are shown as a pair in a calliper type arrangement which is located over the elongate member wall and adapted to move along it. It is to be noted that as the profile (i.e. the cut) is asymmetrical, the measured current produces an asymmetrical waveform as before which again allows directional information to be obtained.

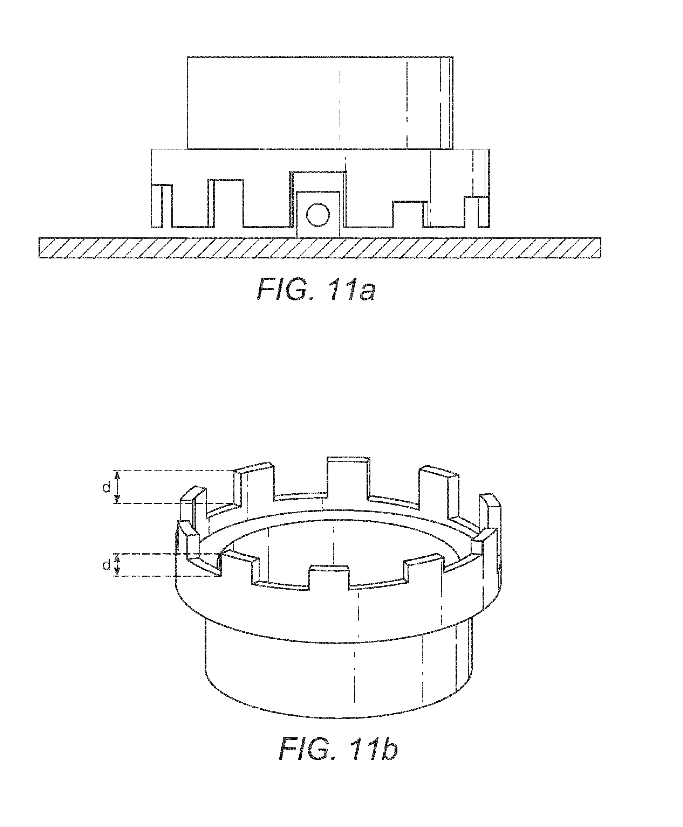

A further example will now be described with reference to figure 11, which shows a sensor ring having a peripheral wall, the profile of which is of castellated form; the wall is therefore of a essentially a rectangular waveform, having a series of rectangular cut-out portions which vary in depth. Figure 11a shows a 3-dimensional view of the ring and figure 11b shows a sectional view. As can be seem from the figures, the profile of the wall along the circumference, the depth "d" of the rectangular cut -outs/castellation varies. Thus, if the wall profile were regarded as viewed providing a rectangular waveform, the amplitude of the cut-out, rectangular waveform varies. Furthermore, the depth/amplitude of the cut-out portions increases/decreases sequentially.

Such a feature allows individual cut-out portions to allow varying amounts of light through, such that the total amount of light falling on a photoresistor varies when each slot comes into alignment with the light source/sensor pair. In this way, by measuring current in a photoresistor sensor, the (absolute) rotational position can be determined.

In preferred examples, the amplitude (depth) varies (decreases or increases) sequentially.

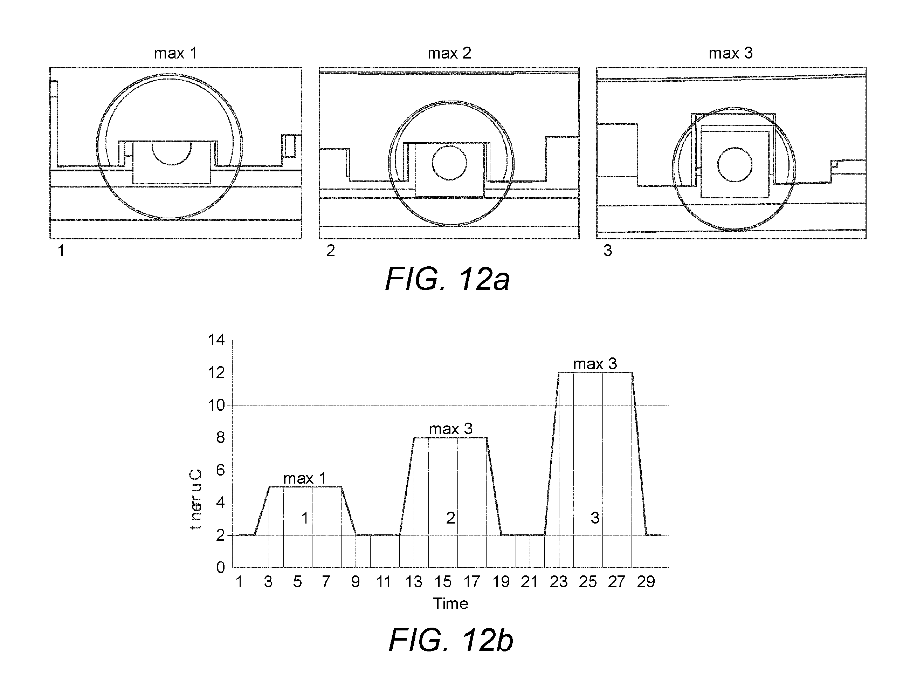

Figure 12a shows a section of the castellated edge of the ring adjacent to the sensor for three different rotational positions of the ring; i.e. they represent snapshots in time as the ring is rotated. In each figure, a different slot portion of the ring is aligned with the sensor/light source, each different slot exposing (bringing into alignment with light source/sensor pair), differing amounts of light incident on a photoresistor. As the ring is rotated through these adjacent and sequential slots, in each successive alignment exposes more of the light source to the sensor. Figure 12b shows the resultant current in a photoresistor sensor against time during uniform rotation; as can be seen the peak current in the corresponding waveform increases sequentially.

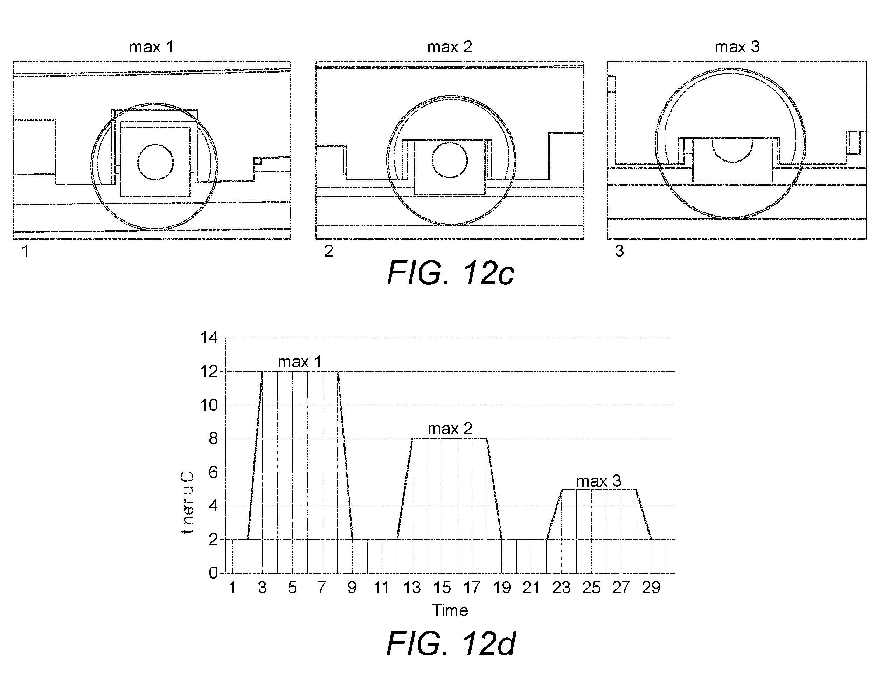

Figure 12c and d shows the same as figure 12a and b respectively but for rotation in the opposite direction. As can be seen the peak current in the corresponding waveform decreases. Such a profile thus also provides directional information.

In all preferred examples, sensitivity and/or accuracy can be increased by providing more than one light sources/sensor pairs. The light source/sensor pairs may be provided at suitable locations such as around the locus (path) of the wall or profile.

It is not necessary that the light source and the light sensor (photoresistor) be located on opposite sides of the profile member or wall. In alternative examples, the sensor and photoresistor may be provided within a single (combined) unit on the same side of the wall (profiled member) and mirror means provided on the opposite side so as reflect the light beam from the source through the slot portions back again and onto the sensor.

Again, although examples have been described with reference to cut-out portions of a ring perimeter wall, and such examples used to determine rotational movement/displacement, aspects of the invention are not limited to this. Aspects of the invention are equally applicable to such profiles being used for determining linear displacement or movement such as for example in machine tools such as milling machines, lathes etc. As mentioned elongate flat plate member may be provided having one edge which includes a cut-out profile similar to the ring wall above, comprising a series out cut out portions so as to form a waveform edges. Again a light-source sensor pair can be provided on a member such as a machine part which moves in a straight line. In other words the waveform, or saw-form, tooth-form or castellated designs can be utilised equally on a flat, straight member (i.e. along a straight flat axis) to determine linear displacement as well as along a circumferential axis as described in examples incorporated into an annular wall. Again such profiles may be attached or embodied on a stationary or moving member, and the light source/sensor arranged on a moving or stationary member respectively.

In addition the invention is not limited to examples and profile members adapted to selectively allow a varying amount of light through (i.e. having varying light transmissibility along an axis) but also to such profiles in general.. For example, rather than being provided by cut-out portions, the profile may be printed onto a white background. The darkness/lightness (i.e. luminosity) will thus vary along the profile axis and this can be determined by any suitable light sensing mean such as photoresistor, digital camera means or a camera element such as an array of CCDs. In some applications (e.g. in dark environment) light may be directed to such a profile, i.e. require a light source. However ambient light may be sufficient in some circumstances.

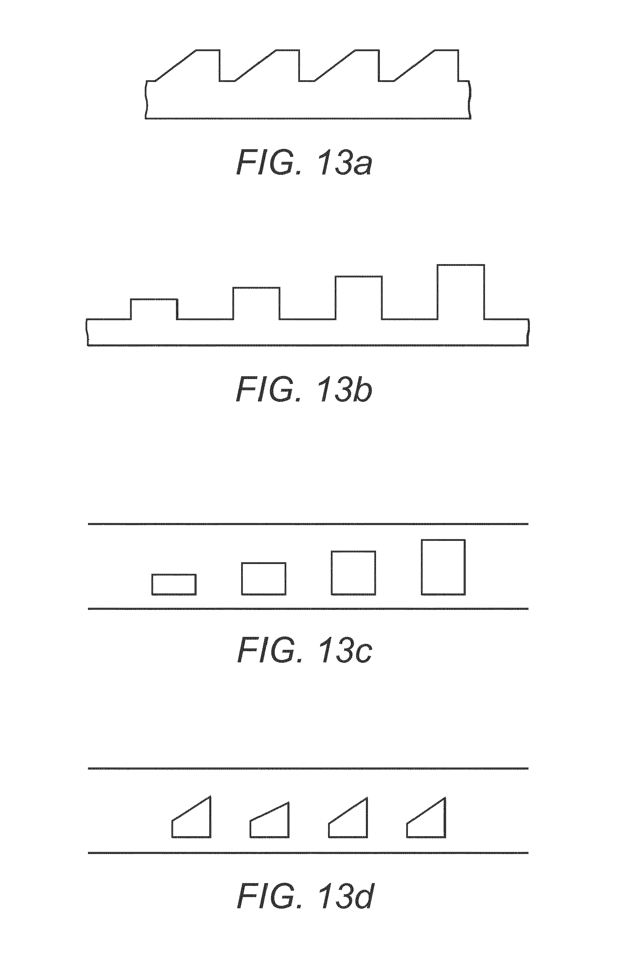

Examples are not limited to the profiles detailed above, but include a variety of possibilities. Figure 13 shows a number of different profiles which are included within the scope of the invention. The profile invention may include, instead of a waveform or tooth-form edge profile, as in figure 13 a and b, a series of slots as in figure 13c and d.

It is to be noted that any profiles (such as those in figure 13) may be provided by shading, rather than cut-out portions or a profiled edge. For example, shaded (e.g. black) profiles can be printed onto elements such as paper/laminate, which are then subsequently be attached to members whose positional (e.g. rotational) movement is to be determined. Hence the luminosity of the elements or profile at different locations can be determined. As mentioned separate light source may not need to be required and ambient light would suffice.

Aspects preferably use photoresistors but as mentioned, other type of light sensing devices may be used.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A member for use in a system to measure relative movement, said member including a profile comprising a series of elements located along an axis, said elements being configured to provide variability in the luminosity or transmissibility of light from/through said elements or within portions of the elements.

2. A member as claimed in claim 1 wherein said elements are regularly spaced along said axis.

3. A member as claimed in claims 1 or 2 wherein said elements are provided by a profiled edge, or cut-out or slotted regions of said member.

4. A member as claimed in claims 1 to 3 wherein said elements comprise shaded portions.

5. A member as claimed in claim 1 to 4 wherein said each of said elements includes a portion which is variable in terms of the amount of said luminosity or transmissibility along said axis.

6. A member as claimed in claims 1 to 5 wherein said profile is wave-form, tooth-form, or saw-form.

7. A member as claimed in claims 1 to 6 wherein said elements are provided by a series of slotted or cut-out portions, or individual waves, teeth, slotted or cut-out portions.

8. A member as claimed in claim 1 to 7 wherein said variability is provided by having waves, teeth, slots, cut-out portions or shaded elements/portions having varying area, pitch, height, amplitude or width.

9. A member as claimed in claim 8 wherein said area, pitch, height, amplitude or width varies in a substantially sequential fashion.

10. A member as claimed in claims 1 to 9 wherein said axis is circumferential, linear or radial.

11. A member as claimed in claims 1 to 10 which is attachable to either a stationary or movable member whose relative movement(s) is to be measured.

12. A member as claimed in claims 1 to 11 wherein the element profile includes a sloped or continuously variable portion with respect to said axis.

13. A member as claimed in claims 1 to 12 wherein said elements are asymmetrical.

14. A method for determining relative movement comprising:
arranging a member as claimed in claims 1 to 13 to be moveable relative to a light sensor along said axis;
detecting by said light sensor, the intensity of light transmitted through, or reflected from, successive or individual elements during said relative movement; and
determining relative movement from the variability in light intensity detected at said light sensor.

15. A method as claimed in claim 14 including arranging a light source so as direct light through successive elements towards said sensor during said relative movement.

16. A method as claimed in claims 14 or 15 wherein relative movement is determined by determining the variation of light intensity provided by said elements or within individual elements, as the element(s) move into alignment with the light sensor.

17. A method as claim in claim 14 to 16 including producing a signal representative of said intensity, and wherein directivity is determined from the form of said signal.

18. A method as claimed in claim 14 to 17 wherein said light sensor is a photoresistor.

19. A system to determine relative movement comprising:
a member as claimed in claims 1 to 13 arranged to be moveable relative to a light sensor along said axis;
means to detect at the light sensor, the intensity of light transmitted through, or reflected from, successive or individual elements during said relative movement; and
means to determine relative movement from the variability in said light intensity detected at said light sensor.

20. A system method as claimed in claim 19 wherein the light source is arranged so as to direct light through successive elements towards said sensor during said relative movement.

21. A system as claimed in claims 19 or 20 including means to determine the variation of light intensity provided by said elements or within individual elements, as the element(s) moves into alignment with the light sensor.

22. A system as claimed in claims 19 to 21 including means to produce a signal representative of said intensity, and wherein the directivity is determined from the form of said signal.

23. A system as claimed in claim 19 to 22 wherein said light sensor is a photoresistor.
